# EUROPEAN PATENT APPLICATION

(11) **EP 4 322 299 A1**
(43) Date of publication of application: **14.02.2024**
(21) Application number: 22893152.3
(22) Date of filing: 08.11.2022
(51) Int. Cl.: H01M 50/258, H01M 50/242, H01M 50/30, H01M 50/211

(54) **BATTERY MODULE AND BATTERY PACK COMPRISING SAME**

(30) Priority: 12.11.2021 KR 20210155901
(71) Applicant: LG Energy Solution, Ltd., Seoul 07335 (KR)
(72) Inventor: JANG, Sung Hwan, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2022/017457
(87) International publication number: WO 2023/085732

(57) **Abstract**

A battery module of the present technology includes a battery cell assembly in which two or more longitudinal unit cells, each of which two or more battery cells having electrode leads at both ends in the longitudinal direction are arranged in a row in the longitudinal direction, are stacked in two or more columns in the thickness direction of the battery cell, and a module case in which the battery cell assembly is accommodated, wherein the module case includes one side plate and the other side plate which are arranged perpendicular with respect to the thickness direction of the battery cell, cover both side surfaces of the battery cell assembly, and are opposite to each other, a coupling protrusion portion is provided on the one side plate, and a coupling concave portion having a shape into which the coupling protrusion portion is fitted is provided in the other side plate.

## Description

### [Technical Field]

The present invention relates to a battery module.

More particularly, the present invention relates to a battery module configured to be expandable, which has a structure capable of preventing assembly deformation when the battery modules are assembled and is capable of discharging gas in the module.

In addition, the present invention relates to a battery module stack composed of the battery modules and a battery pack including the battery module stack.

This application claims the benefit of priority based on Korean Patent Application No. 10-2021-0155901, filed on November 12, 2021, and the entire contents of the Korean patent application are incorporated herein by reference.

### [Background Art]

Recently, secondary batteries that can be charged and discharged have been widely used as energy sources of wireless mobile devices. In addition, the secondary battery has attracted attention as an energy source of an electric vehicle, a hybrid electric vehicle, and the like, which are proposed as a solution for air pollution and the like of existing gasoline vehicles and diesel vehicles using fossil fuel. Accordingly, the types of applications using the secondary battery are diversifying due to the advantages of the secondary battery, and it is expected that the secondary battery will be applied to many fields and products in the future.

In addition, as an energy storage system (ESS), and a power source for an electric vehicle (EV), or the like, there is an increasing demand for a battery module accommodating a plurality of secondary batteries electrically connected in series or in parallel and a battery pack composed of the battery modules.

Such a battery module or battery pack includes an external housing made of a metal material to protect a plurality of secondary batteries from external impacts or receive and store the secondary batteries.

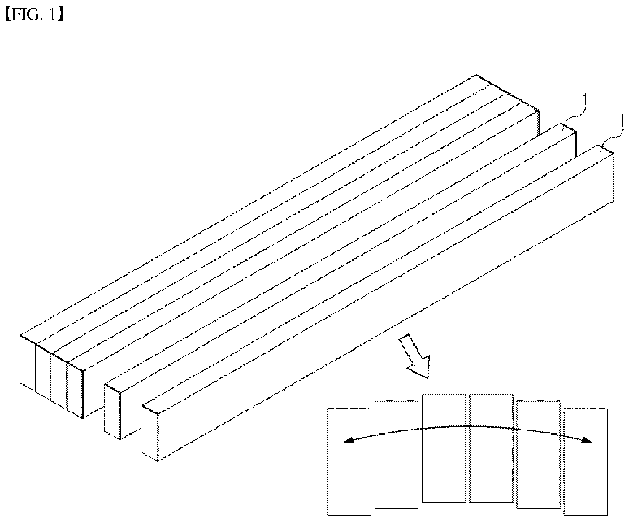

FIG. 1 is a set of a perspective view and a side view illustrating a state when expandable battery modules 1 proposed by the present applicant are stacked.

The present applicant has configured a battery cell assembly by arranging two or more battery cells in a line in a longitudinal direction to form longitudinal unit cells and stacking two or more longitudinal unit cells in two or more columns in a thickness direction of the battery cell. In addition, the present applicant has manufactured a module case in a shape extending in the longitudinal direction according to the shape of the battery cell assembly and surrounding the battery cell assembly. The battery cell assembly is accommodated in the module case of FIG. 1. When the battery cell assembly is configured as described above, the number of the battery cells of the battery cell assembly, which is accommodated in the module case, in the longitudinal direction and the number of columns can be adjusted, so that a degree of freedom in design is improved. In addition, when about two to four battery cell assemblies are stacked in the longitudinal direction and the resultant stack is stacked in about two to six columns in the thickness direction of the battery cell instead of stacking several tens of the battery cell assemblies as in the related art, the battery cell assembly can be configured in a compact manner. In addition, when the battery cell assembly composed of a small number of the battery cells is accommodated in a separate module case, and the battery module including the module case is stacked in the longitudinal direction or the thickness direction of the battery cell like Lego blocks, the battery pack may be freely configured in consideration of a space in which the battery module is installed or an installation space of the battery pack. As described above, with the battery module proposed by the present applicant, various types of battery packs may be manufactured according to a stacking (design) method, and thus the battery module can be referred to as an expandable battery module.

However, when the expandable battery module 1 is assembled and stacked, there are problems as follows.

First, when the battery module 1 is stacked and used in a battery pack, while the battery cells in the battery module undergo charging and discharging in a use condition, assembly deformation is generated due to swelling. When a plurality of battery cells in the battery cell assembly swell, the module case is also stressed due to the swelling. As a result, as shown in a lower drawing of FIG. 1, the assembled shape of the expandable battery modules is deformed. When the assembly deformation occurs, electrical connection members such as sensing cables or sensing terminals configured to connect each battery module 1 may also be deformed, and contact failure may occur when electricity is transmitted to a battery management system (BMS) or another external device, and in severe cases, disconnection may occur, and the electrical connection may be disconnected.

Second, when gas is generated in the battery module 1, there is a risk of being ignited by overheating. Of course, in the case of the battery pack including the battery module 1, a relatively small number of battery cells are accommodated in each battery module case, and thus, there is an advantage that heat does not easily propagate to the adjacent battery module 1. However, when there is a path through which gas cannot be discharged, the stress caused by the swelling is strongly applied as shown in FIG. 1, and the risk of ignition may not be completely removed.

Accordingly, there is a need to develop a battery module related technology capable of preventing assembly deformation due to swelling, efficiently discharging gas inside a battery module, and preventing flame propagation in the battery module and a battery pack including the same.

### [Related-Art Document]

### [Patent Document]

Korean Registered Patent Publication No. 10-2259416

### [Disclosure]

### [Technical Problem]

The present invention has been devised to solve the above problem, and the present invention is directed to providing an expandable battery module having a structure capable of preventing assembly deformation of the battery module configured to be expandable.

The present invention is also directed to providing a battery module capable of effectively discharging gas in the battery module.

The present invention is also directed to providing a battery module stack in which the battery module is stacked, and a battery pack including the same.

### [Technical Solution]

A battery module according to the present invention for solving the above problems includes a battery cell assembly in which two or more longitudinal unit cells, each of which two or more battery cells having electrode leads at both ends in the longitudinal direction are arranged in a row in the longitudinal direction, are stacked in two or more columns in the thickness direction of the battery cell, and a module case configured to accommodate the battery cell assembly, wherein the module case includes one side plate and the other side plate which are arranged perpendicular with respect to the thickness direction of the battery cell, cover both side surfaces of the battery cell assembly, and are opposite to each other, a coupling protrusion portion is provided on the one side plate, and a coupling concave portion having a shape into which the coupling protrusion portion is fitted is provided in the other side plate.

As one example, the coupling protrusion portion and the coupling concave portion may be provided in the same number in parallel at positions corresponding to each other in a longitudinal direction of each of the one side plate and the other side plate, and each provided in plural.

Specifically, the coupling protrusion portion and the coupling concave portion may be provided at each of a front end portion, a middle portion, and a rear end portion of each of the one side plate and the other side plate.

As a specific example, the coupling protrusion portion and the coupling concave portion may be provided in pairs on each of an upper portion and a lower portion of each of the one side plate and the other side plate.

As another example, a venting hole communicating with the outside may be provided in one of the coupling protrusion portion and the coupling concave portion.

According to another aspect of the present invention, a battery module stack has the battery module is stacked in plural in the thickness direction of the battery cell and has a structure in which the battery modules are coupled as the coupling protrusion portion provided on the one side plate of one battery module is fitted into the coupling concave portion of the other side plate of adjacent battery module.

As one example, the coupling protrusion portion and the coupling concave portion may be provided in the same number in parallel at positions corresponding to each other in the longitudinal direction of each of the one side plate and the other side plate, and each provided in plural, and the battery modules may be coupled as the coupling protrusion portion provided on the one side plate of one battery module is fitted into the coupling concave portion at a corresponding position of the other side plate of the adjacent battery module.

As a specific example, the coupling protrusion portion and the coupling concave portion may be provided at each of a front end portion, a middle portion, and a rear end portion of each of the one side plate and the other side plate, and the battery modules may be coupled as the coupling protrusion portion provided on the one side plate of one battery module is fitted into the coupling concave portion at a corresponding position of the other side plate of the adjacent battery module.

As a more specific example, the coupling protrusion portion and the coupling concave portion may be provided in pairs on each of an upper portion and a lower portion of each of the one side plate and the other side plate, and the battery modules may be coupled as the coupling protrusion portion provided on the one side plate of one battery module is fitted into the coupling concave portion at a corresponding position of the other side plate of the adjacent battery module.

As another example, the battery modules may be coupled as the coupling protrusion portion provided on the one side plate of one battery module is fitted into the coupling concave portion of the other side plate of the adjacent battery module with a predetermined gap therebetween.

As another example, a venting hole communicating with the outside may be provided in one of the coupling protrusion portion and the coupling concave portion, and when the coupling protrusion portion provided on the one side plate of one battery module is coupled to the coupling concave portion of the other side plate of the adjacent battery module, the venting hole may communicate with the predetermined gap.

The present invention also provides a battery pack including the battery module stack.

### [Advantageous Effects]

According to the present invention, deformation caused by swelling can be effectively prevented even when battery modules configured to be expandable are stacked and assembled.

In addition, safety can be improved by effectively discharging gas in a battery module through a venting hole of a module case.

### [Brief Description of the Drawings]

FIG. 1 is a set of a perspective view and a side view illustrating a state when expandable battery modules proposed by the present applicant are stacked.
FIG. 2 is an exploded perspective view of an expandable battery module suggested by the present applicant.
FIG. 3 is a plan view illustrating a coupling relationship of a battery cell assembly that is a component of the battery module of FIG. 2.
FIG. 4 is an exterior perspective view of the battery module according to one embodiment of the present invention.
FIG. 5 is a perspective view illustrating an end portion structure of the battery module of FIG. 4.
FIG. 6 is a perspective view illustrating a structure of a middle portion of the battery module FIG. 4.
FIG. 7 is a front view illustrating a state in which the battery modules of FIG. 4 are coupled.
FIG. 8 is a schematic view illustrating a battery module stack according to one embodiment of the present invention.
FIG. 9 is a schematic view illustrating a battery module stack according to another embodiment of the present invention.
FIG. 10 is a schematic view illustrating a module case of a battery module according to still another embodiment of the present invention.
FIG. 11 is an essential-portion side cross-sectional view of a battery module stack according to yet another embodiment of the present invention.
FIG. 12 is a schematic view of a battery pack including a battery module stack composed of the battery module of the present invention.

### [Description of Reference Numerals]

10: battery cell
11 and 12: electrode leads
100: battery cell assembly
110: longitudinal unit cell
200: module case
210: C-shaped wall
220: I-shaped wall
211: the other side plate
212: coupling concave portion
221: one side plate
222: coupling protrusion portion
H and H': venting holes
G: gap
230: front end plate
240: rear end plate
300: venting plate
1000: battery module
1100, 1200, and 1300: battery module stacks
2100: battery pack case
2000: battery pack

### [Best Mode]

Hereinafter, the present invention will be described in detail. Prior to this, terms or words used in the present specification and claims should not be restrictively interpreted as ordinary meanings or dictionary-based meanings, but should be interpreted as meanings and concepts consistent with the technical ideas of the present invention on the basis of the principle that an inventor can properly define the concept of a term to describe and explain his or her invention in the best way.

Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

Further, when a portion such as a layer, a film, an area, a plate, or the like is referred to as being "on" another portion, this includes not only the case in which the portion is "directly on" the another portion but also the case in which still another portion is interposed therebetween. In contrast, when a portion such as a layer, a film, an area, a plate, or the like is referred to as being "below" another portion, this includes not only the case in which the portion is "directly below" the another portion but also the case in which still another portion is interposed therebetween. In addition, to be disposed "on" in the specification of the present invention may include the case disposed at the lower portion as well as the upper portion.t

A battery module according to the present invention includes a battery cell assembly in which two or more longitudinal unit cells, each of which two or more battery cells having electrode leads at both ends in the longitudinal direction are arranged in a row in the longitudinal direction, are stacked in two or more columns in the thickness direction of the battery cell, and a module case configured to accommodate the battery cell assembly, wherein the module case includes one side plate and the other side plate which are arranged perpendicular with respect to the thickness direction of the battery cell, cover both side surfaces of the battery cell assembly, and are opposite to each other, a coupling protrusion portion is provided on the one side plate, and a coupling concave portion having a shape into which the coupling protrusion portion is fitted is provided in the other side plate.

### [Battery module]

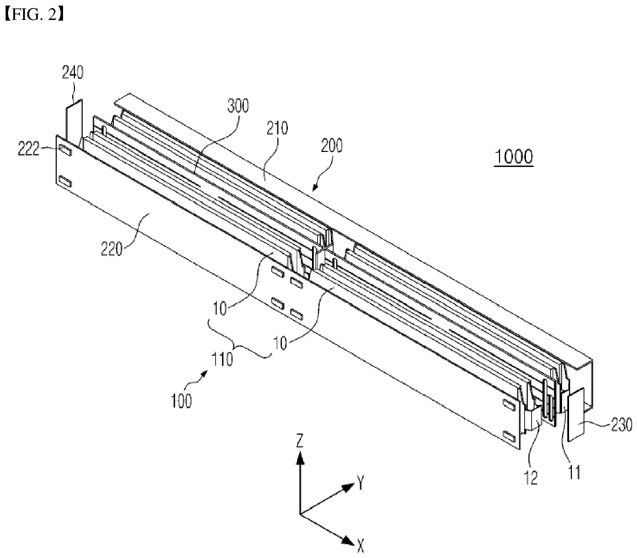

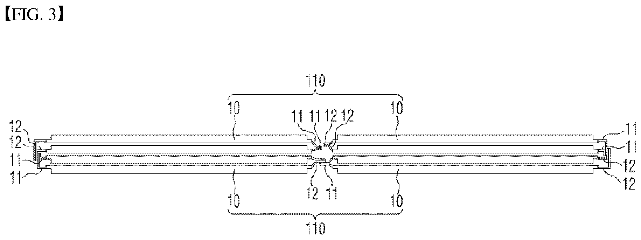

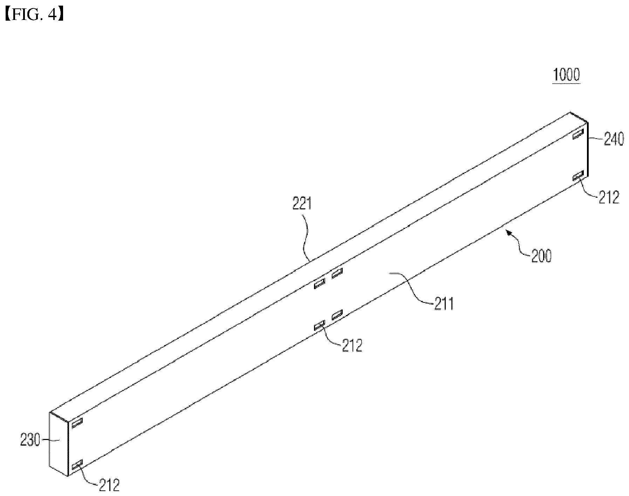

FIG. 2 is an exploded perspective view of an expandable battery module suggested by the present applicant, FIG. 3 is a plan view illustrating a coupling relationship of a battery cell assembly that is a component of the battery module of FIG. 2, and FIG. 4 is an exterior perspective view of the battery module according to one embodiment of the present invention.

A battery module 1000 of the present invention includes a battery cell assembly 100 and a module case 200.

In FIG. 2, based on a typical pouch-shaped battery cell 10 having leads 11 and 12 at both ends thereof and extending in a longitudinal direction, an X direction is the longitudinal direction of the battery cell 10 or the battery module (case), a Y direction (a stacking direction of the battery cells) is a thickness direction of the battery cell 10 or the module case 400, and a Z direction is an up and down direction.

The battery cell 10 of the present invention is directed to a battery cell (a so-called bidirectional battery cell (bidirectional pouch cell)) in which electrode leads 11 and 12 are provided at both ends in the longitudinal direction. According to this configuration, since the positive electrode lead 11 and the negative electrode lead 12 are respectively drawn and provided from both ends of one battery cell 10, there is no interference between the leads to broaden the area of the electrode lead, and a coupling operation of the electrode leads 11, 12 and the bus bar can be more easily performed.

The battery cell assembly 100 of the present invention includes longitudinal battery cells each provided by arranging two or more bidirectional battery cells 10 in a line in the longitudinal direction, as a longitudinal unit cells 110. Specifically, a bundle of battery cells 10 whose electrode leads 11 and 12 face each other in the longitudinal direction is referred to as the longitudinal unit cell 110. Although two battery cells 10 are connected in the longitudinal direction to form the longitudinal unit cell 110 in FIGS. 2 and 3, two or more battery cells may be connected in the longitudinal direction. The number of the battery cells 10 connected in the longitudinal direction is not limited in principle as long as the space of the battery pack in which the battery module case 200 or the battery module 1000 is installed is allowed. However, approximately two to four battery cells 10 may be connected in the longitudinal direction since the space of the battery module 1000 or battery pack that can be actually installed in a vehicle is limited.

The battery cell assembly 100 included in the battery module 1000 of the present invention is configured by stacking the longitudinal unit cells 110 in two or more columns in the thickness direction (Y direction) of the battery cell 10. The number of columns in which the longitudinal unit cells 110 are stacked also depends on the allowable space of the battery module 1000 and the battery pack, the size of the battery cell 10, and the like. In addition, the number of the battery cells 10 in the longitudinal direction, the number of columns, and the like may be determined in consideration of the required capacity of an electric device. As described above, according to the present invention, the number of the battery cell assemblies 100, which are accommodated in the module case 200, in the longitudinal direction of the battery cell and the number of columns may be adjusted, and thus a degree of freedom in design is improved. In addition, the degree of freedom in design may be improved by stacking the battery module 1000 in the thickness direction of the battery cell as many as the required number.

However, in the structure of the expandable battery module 1000 of the present invention or a battery pack to be described below, since a small number of the battery cell assemblies 100 are separately accommodated in the battery module 1000, even when ignition occurs in the battery cells 10 in one battery module 1000, the ignition is difficult to propagate to other battery modules 1000.

As described above, the battery cell assembly 100 of the present invention has the form in which the battery cell assembly 100 is composed of a specific number of the battery cells 10 connected in the longitudinal direction and the thickness direction of the battery cell is accommodated in each module case 200.

The battery cell assembly 100 of the present invention shown in FIGS. 2 and 3 has a so-called 2P4S connection structure and is composed of a total of eight battery cells 10 by connecting two battery cells 10 in the longitudinal direction and stacking the longitudinal unit cells 110 in four columns.

However, the battery cell assembly 100 configured by stacking the two longitudinal unit cells 110 in even-numbered columns, such as four columns (2P4S), six columns (3P4S), or eight columns (4P4S), may also be possible by varying the number of columns of the two longitudinal unit cells connected in the longitudinal direction. In addition, instead of the structure of connecting two longitudinal unit cells in the longitudinal direction, a structure of connecting three longitudinal unit cells (1P6S, 2P6S, 3P6S, ..., or the like), and a structure connecting four longitudinal unit cells (1P8S, 2P8S, 3P8S, ..., or the like), or a structure of connecting more longitudinal unit cells is also possible. For example, it is an advantage of the present invention that a stack structure of each of the longitudinal unit cell 110 and the battery cell assembly 100 can be changed in various and scalable ways according to a design request of the above-described battery module 1000 and the battery pack.

Referring to FIG. 3, it can be seen that the longitudinal unit cells 110 are electrically connected to each other. For example, the longitudinal unit cells 110 of adjacent columns may be connected to each other by bending and welding the leads 11 and 12 of the battery cells at both end portions of the battery cell assembly 100. The longitudinal unit cells 110 may also be connected by welding the leads 11 and 12 of the battery cells, which face each other in the longitudinal direction. However, there is a case in which the leads of the battery cells at portions coupled to a terminal bus bar are not connected to each other. In the longitudinal unit cells of upper two columns in FIG. 3, the leads of the unit cells adjacent in the thickness direction of the battery cell are connected to each other, but the leads of the unit cells facing each other in the longitudinal direction of the battery cell are not connected to each other. However, the electrical connection structure of the longitudinal unit cells or the battery cell assembly 100 is not limited to those described above in FIG. 3 and may be changed to any other forms by changing a series connection structure and a parallel connection structure, an installation position of the terminal bus bar, and the number of columns of the longitudinal unit cells. In addition, the battery cells may also be electrically connected through an inter-bus bar instead of directly connecting the leads of the battery cells.

An insulating plate, an insulating sheet, or the like may be installed between the columns of the longitudinal unit cells 110. In one embodiment of the present invention, a venting plate 300 having a venting channel therein is installed between the columns of the longitudinal unit cells. The venting plate 300 also performs a venting function to discharge gas generated in the battery module 1000 to the outside, but this is not the main subject of the present invention, and thus, a detailed description thereof will be omitted.

In addition, the present invention includes the module case 200 configured to accommodate the battery cell assembly 100.

That is, as shown in FIG. 2, the present invention includes the module case 200 that surrounds and accommodates the battery cell assembly 100. The module case 200 has a rectangular parallelepiped structure extending long in the longitudinal direction to accommodate the battery cell assembly 100 unique to the present invention. In FIG. 2, the module case 200 is formed by coupling a C-shaped wall 210 and an I-shaped wall 220, but the present invention is not limited thereto. For example, a form in which two C-shaped walls disposed left and right or up and down are combined is possible, and a form in which upper, lower, left, and right cases are separated and coupled through welding, hooking coupling, a fastening member, or the like is also possible.

In addition, the module case 200 of the present invention includes a front end plate 230 and a rear end plate 240. The front end plate 230 and the rear end plate 240 are coupled to coupling bodies of the C-shaped wall 210 and the I-shaped wall 220 to close front and rear sides of the module, respectively.

The present invention is characterized in that a unique coupling structure capable of preventing swelling when assembling the battery module 1000 is installed in the module case 200.

FIG. 4 illustrates a state in which the battery cell assembly 100 and internal module components are accommodated and assembled in the module case 200 of FIG. 2. The module case 200 includes the front end plate 230 and the rear end plate 240 at front and rear end portions thereof, respectively. In addition, the module case 200 includes one side plate 221 and the other side plate 211, which are arranged perpendicular with respect to the thickness direction of the battery cell 10 and cover both side surfaces of the battery cell assembly 100, at both side surface portions thereof, respectively. Of course, the module case 200 includes an upper plate and a lower plate covering an upper surface and a lower surface of the battery cell assembly 100, and the front and rear end plates, the one side plate and the other side plate, and the upper and lower plates constitute the module case.

Since the battery module 1000 of the present invention includes the longitudinal unit cell 110, the battery module 1000 has the module case 200 in a shape extending in the longitudinal direction. Accordingly, a battery module stack may be configured by stacking the battery module 1000 in the thickness direction of the battery cell, which is perpendicular with respect to the longitudinal direction of the battery cell 10, and the battery module stack may be stored and assembled in a battery pack case to manufacture the battery pack. As described above, since the shape of the battery module stack is deformed due to swelling when the battery module is stacked, the present invention includes a coupling portion, which may be coupled to the adjacent battery module 1000, in each individual battery module 1000.

That is, the present invention includes coupling protrusion portions 222 provided on the one side plate 221 among the opposite side plates surrounding the battery cell assembly 100 (see FIG. 2), and coupling concave portions 212 (see FIG. 4), into which the coupling protrusion portions 222 can be fitted, in the other side plate 211 of the opposite side plates. In FIG. 4, the battery module (case) of one embodiment of the present invention is illustrated and the coupling concave portions 212 are provided on a right side plate (the other side plate 211) of the module case 200. The coupling protrusion portions 222 are provided on a left side plate (the one side plate 221), which is not visible in FIG. 4. The coupling protrusion portions 222 of the left side plate are well illustrated in FIG. 2. In FIG. 4, the right side plate is the other side plate, and the left side plate is the one side plate. However, since a distinction between one side surface and the other side surface is relative, the coupling protrusion portion may be provided on the right side plate and the coupling concave portion may be provided on the left side plate reversely to that in FIG. 4.

The battery module 1000 of the present invention is assumed to be configured by stacking and combining a plurality of adjacent battery modules 1000, and the one side plate 221 of one battery module 1000 is coupled to the other side plate 211 of another adjacent battery module 1000. Accordingly, the coupling protrusion portion 222 and the coupling concave portion 212 are provided in shapes that can be fitted into and coupled to each other.

For example, when the coupling protrusion portion 222 is provided in a simple rectangular parallelepiped shape, the coupling concave portion 212 should have a concave-shaped space having a volume of a rectangular parallelepiped space into which the rectangular parallelepiped shape can be tightly fitted and inserted. Accordingly, in this case, the volume of the concave space of the coupling concave portion 212 needs to be slightly smaller than the volume of the coupling protrusion portion 222.

Alternatively, it is also possible to form an entrance portion, which is an edge of the coupling concave portion 212, to be smaller than a width of the coupling protrusion portion 222 so that the coupling protrusion portion 222 is forcibly fitted at the entrance portion, but a predetermined space is provided between the coupling protrusion portion 222 and of the coupling concave portion 212 at an inner side of the coupling concave portion 212. To this end, the scope of the present invention includes a form in which a protrusion portion in a locking protrusion shape is provided on the entrance portion of the coupling concave portion 212, and the coupling protrusion portion 222 is coupled to the coupling concave portion 212 while moving across over the locking protrusion. In addition, a locking portion corresponding to the locking protrusion may be also provided on the coupling protrusion portion 222.

That is, the "coupling concave portion 212 having a shape into which the coupling protrusion portion 222 can be fitted" referred to in the present invention includes all forms or shapes of the coupling concave portion 212 having a shape fitted with a locking protrusion or the like, or the coupling protrusion portion 222 corresponding thereto, in addition to a simple protruding-concave shape.

Referring to FIGS. 4 to 6, the coupling protrusion portions 222 and the coupling concave portions 212 may be provided in the same number at positions corresponding in parallel to each other in the longitudinal direction of the module case 200, specifically, in the longitudinal direction of each of the one side plate 221 and the other side plate 211. By forming the coupling protrusion portion 222 and the coupling concave portion 212 at corresponding coupling positions, the battery module 1000 may be manufactured by standardizing the shape thereof, and a plurality of battery modules may be easily assembled like Legos using the standardized battery modules 1000.

In order to securely couple the adjacent battery modules, as shown in FIG. 4, the coupling protrusion portions 222 and the coupling concave portions 212 may be provided at least three places of the battery module 1000 extending in the longitudinal direction, that is, a front end portion, a middle portion, and a rear end portion.

In addition, since each of the opposite side plates 211 and 221 has a predetermined width in a vertical direction, the coupling protrusion portion 222 and the coupling concave portion 212 may be provided in pairs at each of upper and lower portions of each of the one side plate 221 and the other side plate 211. In this regard, the battery module 1000 of FIG. 4 has the coupling concave portions 212 in a total of six places of the other side plate 211, and the one side plate 221 on a left side that is not visible also has the coupling protrusion portions 222 in a total of six places. However, when the coupling concave portion 212 and the coupling protrusion portion 222 are provided in pairs in the vertical direction, it is not necessary to form one coupling portion on each of the upper and lower portions, and as necessary, a plurality of coupling portions may be provided on each of the upper and lower portions.

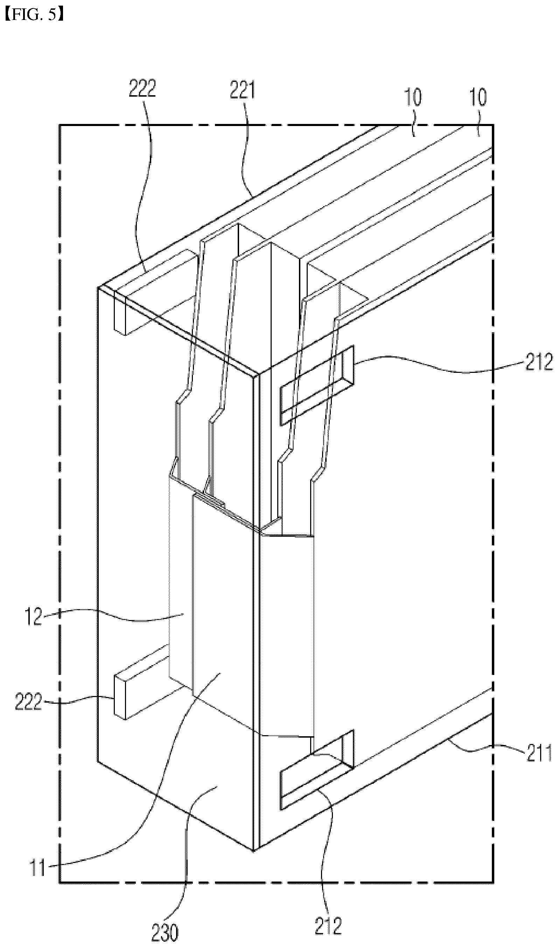

FIG. 5 is a perspective view illustrating an end portion structure of the battery module 1000 of FIG. 4.

Referring to FIG. 5, the coupling concave portion 212 is provided in each of the upper and lower portions of the other side plate 211 at the front end portion of the battery module 1000, and the coupling protrusion portion 222 is provided on each of the upper and lower portions of the one side plate 221 opposite to the other side plate 211. For reference, the leads 11 and 12 of the battery cells 10 located at front ends of two columns of the left and right longitudinal unit cells 110 are bent toward and connected to each other in the case at the front end portion of the battery module 1000. FIG. 5 illustrates a structure of the front end portion of the battery module 1000, but the same structure can be applied to the rear end portion.

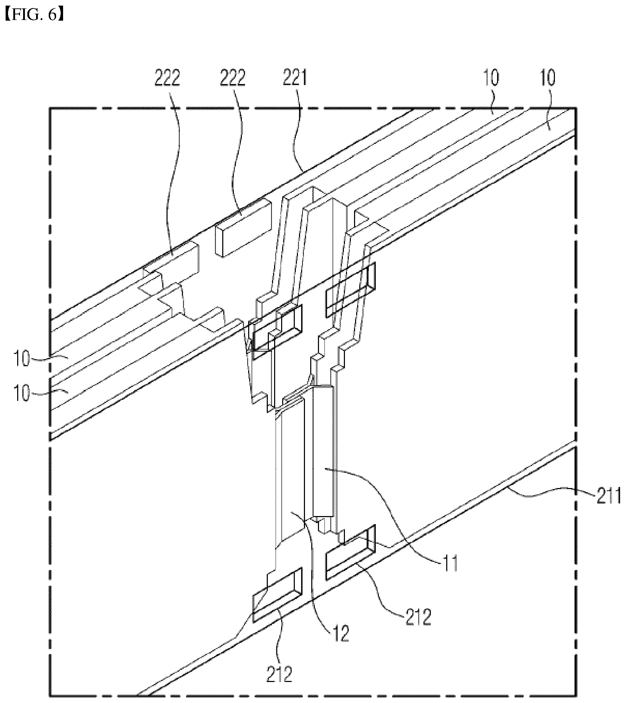

FIG. 6 is a perspective view illustrating a structure of a middle portion of the battery module 1000 of FIG. 4.

Referring to FIG. 6, the coupling concave portion 212 is provided in each of the upper and lower portions of the other side plate 211 at the middle portion of the battery module 1000, and the coupling protrusion portion 222 is provided on each of the upper and lower portions of the one side plate 221 opposite to the other side plate 211. In this case, in order to reinforce the coupling, a total of two coupling portions, one on each of the left and right sides, are provided on the upper and lower portions of each of the side plates. For reference, the leads 11 and 12 of the battery cells 10, which face each other in the longitudinal direction, may be coupled in the case at the middle portion of the battery module 1000. In addition, as described above, the terminal bus bar (not shown) may be coupled in this portion.

### [Modes of the Invention]

### [Battery module stack]

### (First embodiment)

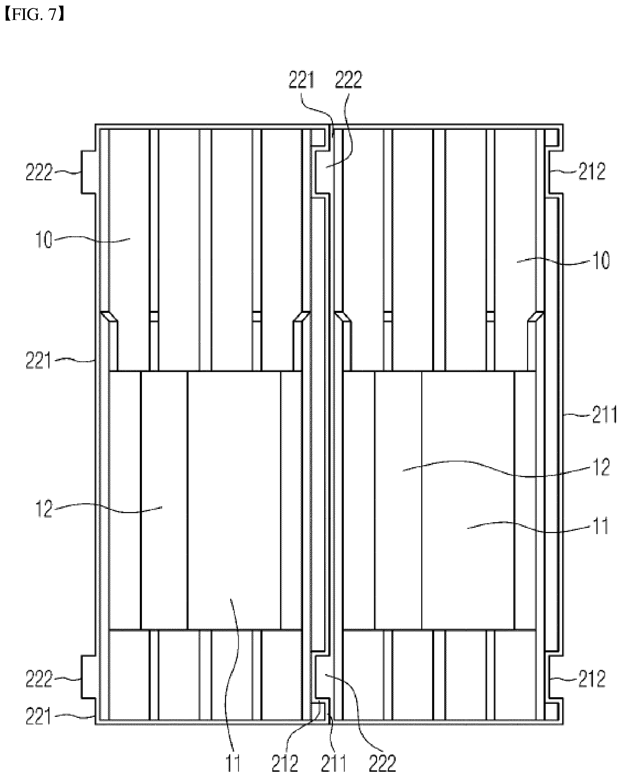

FIG. 7 is a front view illustrating a state in which the battery modules of FIG. 4 are coupled.

FIG. 7 illustrates that two left and right battery modules 1000 having the same shape are coupled, and the battery module 1000 has the battery cell assembly 100 with a so-called 2P4S configuration built therein. The electrode leads 11 and 12 of the battery cells at the forefront of the battery cell assembly 100 are bent, coupled, and electrically connected. It is well illustrated that the coupling protrusion portion 222 provided on the one side plate 221 of the battery module 1000 is fitted into the coupling concave portion 212 provided on the other side plate 211 of the adjacent battery module 1000. Due to such coupling, even when a plurality of battery modules are stacked and coupled in the thickness direction of the battery cell, assembly deformation due to swelling may be suppressed.

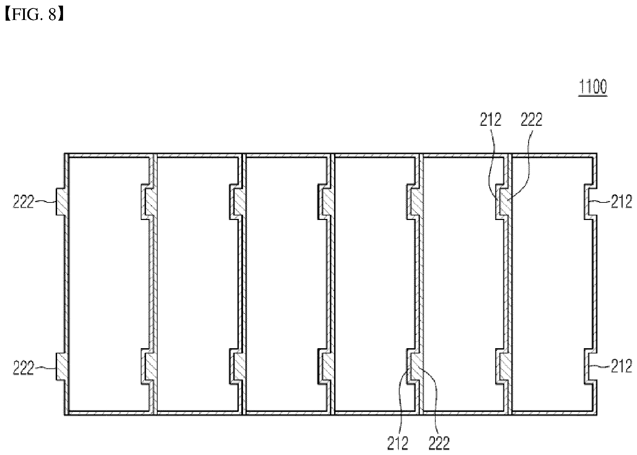

FIG. 8 is a schematic view illustrating a battery module stack according to one embodiment of the present invention.

FIG. 8 illustrates a case in which the number of the battery modules 1000 coupled is increased as compared to that of FIG. 7. As shown in the drawing, it can be seen that each battery module 1000 is firmly coupled like a Lego block by coupling each coupling protrusion portion 222 and each coupling concave portion 212 sequentially in the thickness direction of the battery cell.

A battery module stack 1100 of FIGS. 7 and 8 is a structure in which the coupling protrusion portion 222 of the battery module 1000 is tightly fitted into the coupling concave portion 212 without a predetermined gap. When the battery modules are coupled, the rigidity of the battery module stack 1100 is increased when the coupling protrusion portion 222 is tightly fitted into the coupling concave portion 212, so that the above-described deformation suppressing capability during swelling can be further increased.

On the other hand, second and third embodiments as will described below have a structure in which the coupling protrusion portion 222 is coupled to the coupling concave portion 212 with a predetermined gap. In this case, there is an advantage in that a venting function for safety is excellent since the gap can be a gas discharge path between the battery modules.

### (Second embodiment)

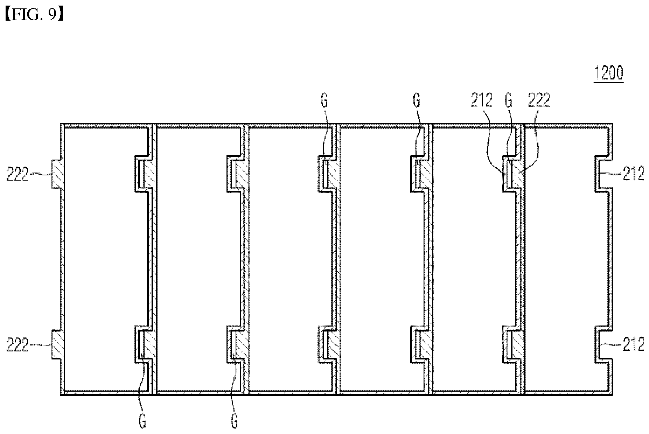

FIG. 9 is a schematic view illustrating a battery module stack 1200 according to another embodiment of the present invention.

The structure of the battery module itself of the present embodiment is the same as that of the first embodiment.

The present embodiment has a form in which the coupling protrusion portion 222 provided on the one side plate 221 of one battery module 1000 is fitted into and coupled to the coupling concave portion 212 of the other side plate 211 of the adjacent battery module 1000 with a predetermined gap G therebetween when the battery modules are coupled to configure the battery module stack 1200. To this end, the shape of each of the coupling concave portion 212 and the coupling protrusion portion 222 may be changed. As shown in FIG. 9, the predetermined gap G may be provided between the coupling protrusion portion 222 and the coupling concave portion 212 by making a protruding length of the coupling protrusion portion 222 smaller than a depth of the coupling concave portion 212. Alternatively, although not shown in the drawing, the coupling protrusion portion 222 and the coupling concave portion 212 may be configured in a form in which an entrance portion of the coupling concave portion 212 has a small width and includes a locking protrusion, a protruding surface of the coupling protrusion portion 222 is not in contact with a bottom surface of the coupling concave portion 212 after the coupling protrusion portion 222 passes through the entrance portion of the coupling concave portion 212 and is coupled to the coupling concave portion 212.

Since the coupling protrusion portion 222 and the coupling concave portion 212 are coupled to each other even in the embodiment of FIG. 9, assembly deformation due to swelling can be suppressed. In particular, in the present embodiment, the gap G is provided between the coupling concave portion 212 and the coupling protrusion portion 222, so that the gap G becomes a venting path between the battery modules 1000. For example, when a venting hole is provided in a module case or the like of the battery module 1000, gas in the module can be discharged to the outside from the venting hole. In this case, the gap G may be a venting channel through which the gas discharged from the venting hole flows. That is, in the present embodiment, the predetermined gap G serves as a venting channel extending in the longitudinal direction of the battery module 1000. For example, when the battery module stack 1200 is accommodated in a battery pack case and a venting hole communicating with the outside is provided in the battery pack case, gas discharged from each battery module can be discharged to the outside through the venting channel (gap) and the venting hole of the battery pack case.

As shown in FIG. 9, since each gap G may be provided between the battery modules, the battery module stack 1200 of the present embodiment has a shape having a plurality of venting channels.

Accordingly, the present embodiment provides a structure capable of venting gas in the battery module 1000, so that the safety of the battery module 1000, the battery module stack 1200, and the battery pack may be improved while deformation of the battery module 1000 during assembly is suppressed.

### (Third embodiment)

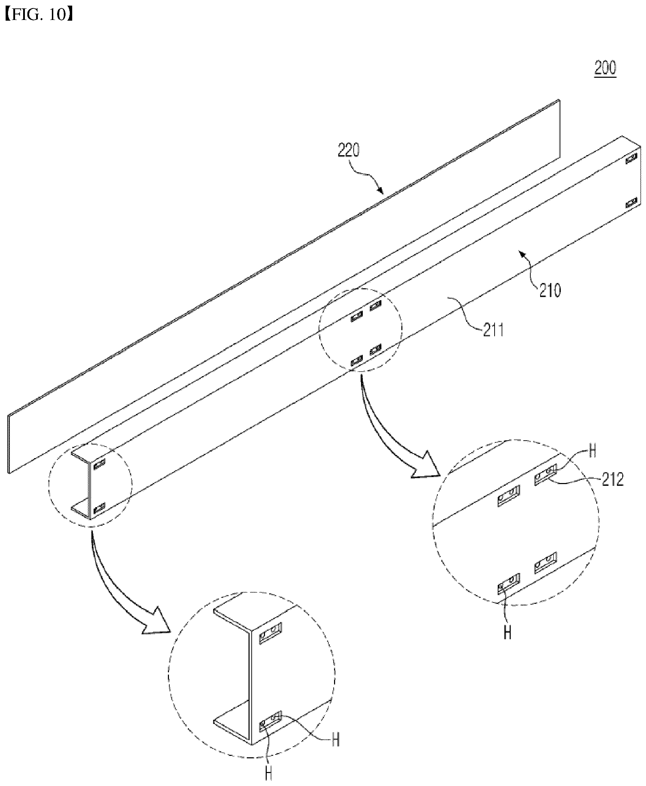

FIG. 10 is a schematic view illustrating a module case 200 of a battery module 1000 according to still another embodiment of the present invention.

The module case 200 of the present embodiment is characterized in that a venting hole H is provided in a coupling concave portion 212 provided on the other side plate 211 among opposite side plates surrounding the battery cell assembly 100.

A pair of venting holes H are provided in the coupling concave portion 212 so that gas generated in the module can be discharged to the outside through the venting holes H of the coupling concave portion 212.

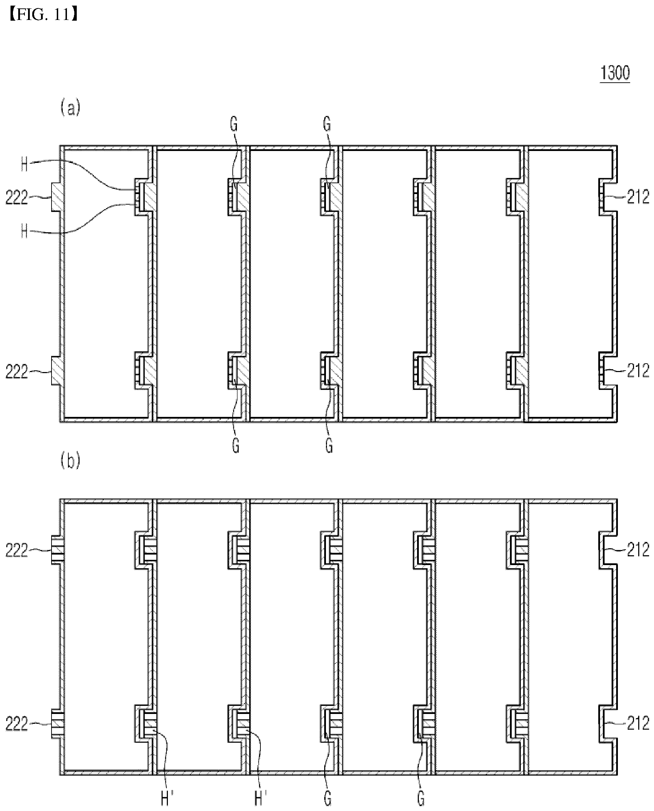

FIG. 11 is an essential-portion side cross-sectional view of a battery module stack 1300 according to yet another embodiment of the present invention.

(a) of FIG. 11 is an assembled stack of battery modules, to which the module case 200 of FIG. 10 is applied. (a) of FIG. 11 illustrates a structure in which the coupling concave portion 212 and the coupling protrusion portion 222 of the adjacent battery modules 1000 are fitted into and coupled to each other with a predetermined gap G therebetween, and a venting hole H communicating with the predetermined gap G is provided in the coupling concave portion 212 of each battery module 1000. Accordingly, gas generated in each battery module 1000 can be more effectively discharged to the outside of the battery module 1000 or the battery module stack 1300 through the venting hole H of the coupling concave portion 212 and the predetermined gap G (venting channel). That is, in the present embodiment, a venting function of the battery module stack 1300 is further improved by further forming the venting hole H, which is directly connected to the predetermined gap G, in the battery module 1000 in addition to the structure in which the predetermined gap G of the second embodiment is provided.

The venting hole H may also be provided in the coupling protrusion portion 222 as well as in the coupling concave portion 212. In (b) of FIG. 11, a venting hole H' is provided at the coupling protrusion portion 222 side rather than the coupling concave portion 212 side, and the venting hole H' and the predetermined gap G communicate with each other.

As described above, in the present embodiment, gas in the battery module 1000 can be more effectively discharged by utilizing a coupling space between the battery modules 1000, so that the safety of the battery module 1000, the battery module stack 1300, and the battery pack can be more improved.

However, the venting hole H or H' needs to be provided only on one side of the coupling protrusion portion 222 and the coupling concave portion 212. When the venting hole is provided on both sides of the coupling protrusion portion 222 and the coupling concave portion 212, the adjacent battery modules have a structure in which the adjacent battery modules communicate with each other through the venting holes and the gap G therebetween. In this case, there is a risk in which, when gas or flame is generated in one battery module 1000, the gas or flame propagates to adjacent battery modules 1000. That is, for the safety of the battery module stack 1300, the venting hole is provided only on one side of the coupling protrusion portion 222 and the coupling concave portion 212 so that the adjacent battery modules are prevented from communicating with each other.

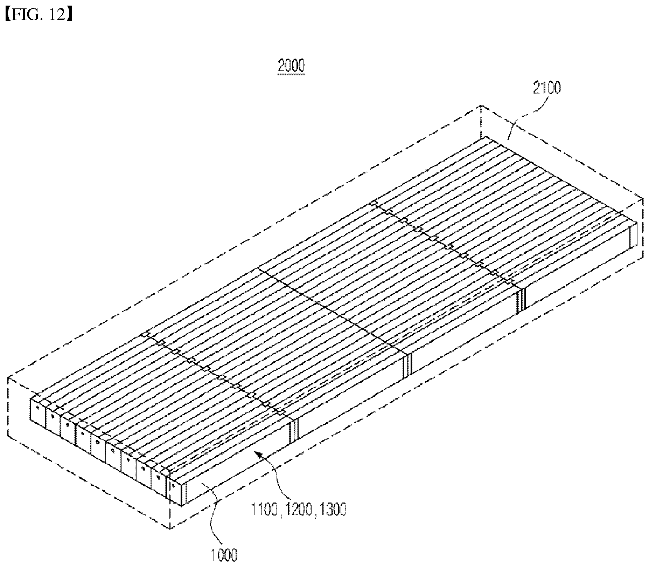

FIG. 12 is a schematic view of a battery pack 2000 including a battery module stack 1100 composed of the battery module 1000 of the present invention.

As described above, the battery module 1000 of the present invention includes the battery cell assembly 100 in which the battery cell 10 is used as the longitudinal unit cell 110 and stacked in the thickness direction of the battery cell by a predetermined number, and a module case 200 extending long in the longitudinal direction to correspond thereto. Accordingly, a form in which the battery module 1000 is easily connected in the longitudinal direction or the thickness direction, such as a Lego block, is obtained. As shown in FIG. 12, a plurality of expandable battery modules 1000 may be stacked in the longitudinal direction and thickness direction of the battery cell 10 in one battery pack case 2100 to configure the battery module stack 1100, 1200, or 1300. The stacking direction (shape) of the expandable battery modules 1000 may be changed so as to correspond to the shape of the battery pack case 2100 to be applied in addition to that shown in FIG. 12. In this respect, it can say that the expandable battery module 1000 of the present invention has an extremely high degree of freedom in design. In particular, as described above, the battery module or the battery module stacks 1200 and 1300 of the second and third embodiments have the predetermined gap G (venting channel) between the battery modules 1000 or have the venting hole H or H' communicating with the gap. Accordingly, when a venting path communicating with the venting hole H or H' and the venting channel is provided in the battery pack case 2100, gas inside the battery pack 2000 can also be easily removed.

The drawings disclosed herein are considered to be descriptive and not restrictive of the technical spirit of the present invention, and the scope of the technical spirit of the present invention is not limited by these drawings. The scope of the present invention should be construed by the appended claims along with the full range of equivalents to which such claims are entitled.

Meanwhile, in the present specification, terms indicating directions such as "up," "down," "left,", "right," "front," and "rear" are used, but these terms are only for convenience of description, and it will be obvious to those skilled in the art that these terms may vary depending on positions of an object, positions of an observer, or the like.

## Claims

1. A battery module comprising:
a battery cell assembly in which two or more longitudinal unit cells, in each of which two or more battery cells having electrode leads at both ends in a longitudinal direction are arranged in a row in the longitudinal direction, are stacked in two or more columns in the thickness direction of the battery cell; and
a module case configured to accommodate the battery cell assembly,
wherein the module case includes one side plate and the other side plate which are arranged perpendicular with respect to the thickness direction of the battery cell, cover both side surfaces of the battery cell assembly, and are opposite to each other,
a coupling protrusion portion is provided on the one side plate, and
a coupling concave portion having a shape into which the coupling protrusion portion is fitted is provided in the other side plate.

2. The battery module of claim 1, wherein the coupling protrusion portion and the coupling concave portion are provided in the same number at positions corresponding in parallel to each other in a longitudinal direction of each of the one side plate and the other side plate, and provided in plural, respectively.

3. The battery module of claim 2, wherein the coupling protrusion portion and the coupling concave portion are provided at each of a front end portion, a middle portion, and a rear end portion of each of the one side plate and the other side plate.

4. The battery module of claim 2, wherein the coupling protrusion portion and the coupling concave portion are provided in pairs on each of an upper portion and a lower portion of each of the one side plate and the other side plate.

5. The battery module of claim 1, wherein a venting hole communicating with the outside is provided in one of the coupling protrusion portion and the coupling concave portion.

6. A battery module stack in which the battery module of claim 1 is stacked in plural in the thickness direction of the battery cell and which has a structure in which the battery modules are coupled as the coupling protrusion portion provided on the one side plate of one battery module is fitted into the coupling concave portion of the other side plate of adjacent battery module.

7. The battery module stack of claim 6, wherein
the coupling protrusion portion and the coupling concave portion are provided in the same number at positions corresponding in parallel to each other in the longitudinal direction of each of the one side plate and the other side plate, and provided in plural, respectively, and
the battery modules are coupled as the coupling protrusion portion provided on the one side plate of one battery module is fitted into the coupling concave portion at a corresponding position of the other side plate of the adjacent battery module.

8. The battery module stack of claim 6, wherein
the coupling protrusion portion and the coupling concave portion are provided at each of a front end portion, a middle portion, and a rear end portion of each of the one side plate and the other side plate, and
the battery modules are coupled as the coupling protrusion portion provided on the one side plate of one battery module is fitted into the coupling concave portion at a corresponding position of the other side plate of the adjacent battery module.

9. The battery module stack of claim 6, wherein
the coupling protrusion portion and the coupling concave portion are provided in pairs on each of an upper portion and a lower portion of each of the one side plate and the other side plate, and
the battery modules are coupled as the coupling protrusion portion provided on the one side plate of one battery module is fitted into the coupling concave portion at a corresponding position of the other side plate of the adjacent battery module.

10. The battery module stack of claim 6, wherein the battery modules are coupled as the coupling protrusion portion provided on the one side plate of one battery module is fitted into the coupling concave portion of the other side plate of the adjacent battery module with a predetermined gap therebetween.

11. The battery module stack of claim 10, wherein
a venting hole communicating with the outside is provided in one of the coupling protrusion portion and the coupling concave portion, and
when the coupling protrusion portion provided on the one side plate of one battery module is coupled to the coupling concave portion of the other side plate of the adjacent battery module, the venting hole communicates with the predetermined gap.

12. A battery pack comprising the battery module stack of any one of claims 6 to 11.
